# EUROPEAN PATENT APPLICATION

(11) **EP 4 567 459 A1**
(43) Date of publication of application: **11.06.2025**
(21) Application number: 23937297.2
(22) Date of filing: 06.12.2023
(51) Int. Cl.: G01S 7/481, G01S 17/08, G01S 17/86, A47L 11/24, B25J 11/00

(54) **RANGING DEVICE AND ROBOT**

(30) Priority: 15.05.2023 CN 202310550531; 18.08.2023 CN 202311052379
(71) Applicant: Shenzhen Camsense Interactive Technology Co., Ltd, Shenzhen, Guangdong 518000 (CN)
(72) Inventor: ZHOU, Kun, Shenzhen, Guangdong 518000 (CN); LI, Le, Shenzhen, Guangdong 518000 (CN); MA, Ji, Shenzhen, Guangdong 518000 (CN)
(74) Representative: Ipside
(86) International application number: PCT/CN2023/136843
(87) International publication number: WO 2024/234626

(57) **Abstract**

The present disclosure provides a ranging device and a robot. The ranging device includes a transceiver assembly and a first reflective sheet. The transceiver assembly includes an emitter component configured to emit light and a receiver component configured to receive light. A rotatable first reflective sheet is arranged on a light path of the emitter component, wherein the first reflective sheet reflects, at different angles, the light emitted by the emitter component, the reflected light including at least first light and second light, the first light and the second light defining a first plane. The first light and the second light define an included angle F there between, 0°<F<180°. The first plane and a rotation axis of the first reflective sheet define an included angle G there between, G being any one of 0°, 180°, an acute angle, or an obtuse angle. The ranging device according to the present disclosure is capable of achieving environmental perception and obstacle avoidance while reducing the size and manufacture cost of the ranging device or the robot.

## Description

### Cross-Reference to Related Application

This application is based upon and claims priority to Chinese Patent Application No. 202310550531.7, filed before China National Intellectual Property Administration on May 15, 2023 and entitled "RANGING DEVICE AND ROBOT," and Chinese Patent Application No. 202311052379.6, filed before China National Intellectual Property Administration on August 18, 2023 entitled "RANGING DEVICE AND ROBOT," the contents of which are incorporated herein by reference in their entire ties.

### Technical Field

Embodiments of the present disclosure relate to the technical field of ranging, and in particular, relate to a ranging device and a robot.

### Background of the Invention

Light detection and ranging has been widely applied in the robotics field due to its all-weather environmental adaptability. In particular, for a robotic vacuum cleaner, a protruding Light detection and ranging is typically mounted on the top thereof for positioning and navigation. However, Light detection and ranging only provides planar information, and thus it is difficult for the robotic vacuum cleaner to perceive low obstacles in complex environments of users' homes using only Light detection and ranging. As a result, the robotic vacuum cleaner often employs a Light detection and ranging in combination with one or more obstacle-avoidance sensors for navigation and obstacle avoidance. This solution enables environmental perception and obstacle avoidance to some extent. However, the increased number of sensors raises the cost of robotic vacuum cleaner and enlarges its size. As such, it is challenging for the cleaner to effectively clean confined spaces.

### Summary of the invention

Embodiments of the present disclosure are intended to provide a ranging device and a robot, which are capable of achieving environmental perception and obstacle avoidance while reducing the size and manufacture cost of the ranging device or the robot.

To solve the above technical problem, embodiments of the present disclosure employ the following technical solutions.

In a first aspect, some embodiments of the present disclosure provide a ranging device. The ranging device includes a transceiver assembly and a first reflective sheet. The transceiver assembly includes an emitter component configured to emit light and a receiver component configured to receive light. A rotatable first reflective sheet is arranged on a light path of the emitter component, wherein the first reflective sheet reflects, at different angles, the light emitted by the emitter component, the reflected light including at least first light and second light, the first light and the second light defining a first plane. The first light and the second light define an included angle F therebetween, 0°<F<180°. The first plane and a rotation axis of the first reflective sheet defined an included angle G, G being any one of 0°, 180°, an acute angle, or an obtuse angle.

In some embodiments, the emitter component is a line light source emitter, wherein at least a portion of light emitted by the line light source emitter is reflected by the first reflective sheet to define the first plane; or the emitter component is a surface light source emitter, wherein at least a portion of light emitted by the surface light source emitter is reflected by the first reflective sheet to define the first plane.

In some embodiments, a mirror of the first reflective sheet is a non-planar mirror, wherein the non-planar mirror is capable of splitting the light emitted by the emitter component into at least first light and second light, the second light being deflected upward or downward relative to the first light.

Some embodiments of the present disclosure provide a ranging device. The ranging device includes a transceiver assembly and a first reflective sheet. The transceiver assembly includes an emitter component configured to emit light and a receiver component configured to receive light, wherein the light emitted by the emitter component includes at least first light and second light. A rotatable first reflective sheet is arranged on a light path of the emitter component, wherein the first reflective sheet, when rotating, reflects the second light at different angles, the reflected light being deflected upward or downward relative to the first light.

In some embodiments, the first light is parallel to the second light. The ranging device further includes a diffuser, wherein the diffuser is configured to diffuse the second light into a line-shaped beam, the line-shaped beam being deflected upward or downward relative to the first light.

In some embodiments, the light emitted by the emitter component further includes third light, wherein upon reflection by the first reflective sheet, the second light is deflected downward relative to the first light, and the third light is deflected upward relative to the first light.

In some embodiments, the transceiver assembly further includes one or a plurality of second reflective sheets, wherein the second reflective sheet is configured to reflect the first light and the second light to the first reflective sheet.

In some embodiments, the transceiver assembly further includes a beam splitter, wherein the beam splitter is arranged on a light-exit path of the emitter component, and is configured to split the light emitted by the emitter component into at least the first light and the second light.

In some embodiments, the transceiver assembly further includes a deflector, wherein the emitter component is arranged facing toward the deflector, a portion of the light emitted by the emitter component forms the first light, and another portion of the light emitted by the emitter component is deflected upward or downward via the deflector to form the second light.

Some embodiments of the present disclosure provide a ranging device. The ranging device includes a transceiver assembly, a first reflective sheet, and a beam splitter. The transceiver assembly includes an emitter component configured to emit light and a receiver component configured to receive light. A rotatable first reflective sheet is arranged on a light path of the emitter component, wherein the first reflective sheet reflects, at different angles, the light emitted by the emitter component. The beam splitter is configured to split the light reflected by the first reflective sheet into at least first light and second light, the second light being deflected upward or downward relative to the first light.

In some embodiments, the ranging device further includes a camera assembly; wherein the camera assembly includes a depth camera and/or an infrared camera. A first angle of field of the transceiver assembly is partially overlapped with or not overlapped with a second angle of field of the camera assembly. The transceiver assembly is configured to generate point cloud data of an environment with the first angle of field, the camera assembly is configured to capture image data of an environment within the second angle of field, and the ranging device performs navigation and obstacle avoidance based on the point cloud data and the image data.

In some embodiments, the first reflective sheet includes a plurality of reflective planes, wherein the plurality of reflective planes are arranged around a rotation axis of the first reflective sheet.

In some embodiments, the first reflective sheet includes two reflective surfaces, wherein the two reflective surfaces are respectively arranged on two sides of the rotation axis of the first reflective sheet. The two reflective surfaces are respectively a first reflective surface and a second reflective surface, wherein a third inclination angle is defined between the first reflective surface and the second reflective surface.

In some embodiments, the ranging device further includes a mounting portion; wherein the mounting portion includes a holder and a connection frame connected to the holder, the emitter component and the receiver component are both mounted on the holder, the connection frame is connected to the holder, and is arranged between the emitter component and the receiver component, and the first reflective sheet is rotatably arranged on the connection frame.

In some embodiments, the ranging device further includes a mounting portion, a base, and a mounting frame mounted on the base. The mounting frame includes a first wall portion, a second wall portion, a third wall portion, and a fourth wall portion, wherein the first wall portion and the second wall portion are arranged oppositely in a first direction, the third wall portion and the fourth wall portion are both connected between the first wall portion and the second wall portion, and the third wall portion and the fourth wall portion are arranged oppositely in a second direction. The emitter component and the receiver component are both arranged on an inner wall of the first wall portion, or the emitter component and the receiver component are both secured to the base and are positioned inside the mounting frame. The third wall portion and/or the fourth wall portion are configured to allow transmission of the light emitted by the emitter component.

In some embodiments, the ranging device further includes a processing module. Within a predetermined rotation angle of the first reflective sheet, the processing module is configured to acquire measurement data by scanning using the light emitted by the emitter component. Within each rotation cycle of the first reflective sheet, the processing module acquires at least two sets of the measurement data.

In some embodiments, the ranging device further includes a drive mechanism mounted on the mounting portion; wherein the drive mechanism is transmissively connected to the first reflective sheet, and is configured to drive the first reflective sheet to rotate. The ranging device further includes a detection assembly; wherein the detection assembly is arranged in the mounting portion and is connected to the drive mechanism, and the detection assembly is configured to detect a commutation signal of the drive mechanism to acquire a rotation angle and a rotation speed of the first reflective sheet. A first identification portion is arranged on the drive mechanism, and in the case that the first reflective sheet rotates to a first predetermined position, the detection assembly is configured to detect the first identification portion to determine a rotation start angle of the first reflective sheet.

In some embodiments, the ranging device further includes a detection assembly, a photoelectric encoder disk, and a drive mechanism; wherein the first reflective sheet is arranged on the photoelectric encoder disk, and the drive mechanism is configured to drive the photoelectric encoder disk to rotate. A plurality of detection portions are arranged on the photoelectric encoder disk. The detection assembly is configured to detect the detection portion, and determine a rotation start angle, a rotation angle, and a rotation speed of the first reflective sheet based on the detected detection portion.

In some embodiments, the ranging device further includes a photosensitive element; wherein in the case that the first reflective sheet rotates **to** a second predetermined position, the first reflective sheet reflects light toward the photosensitive element, and the photosensitive element determines a rotation start angle and a rotation speed of the first reflective sheet based on the detected light.

In a second aspect, some embodiments of the present disclosure further provide a robot. The robot includes the ranging device according to any embodiment of the first aspect.

In some embodiments, the robot has a first side and a second side that are arranged oppositely in a first direction. The transceiver assembly is configured to emit light toward the first side or the second side, and the first reflective sheet rotates such that the first reflective sheet reflects the light toward a forward direction of the robot.

In some embodiments, the robot further includes a camera assembly; wherein a lens of the camera assembly faces toward a forward direction, a backward direction, a first side, a second side, or an upward direction of the robot.

In some embodiments, the robot further includes a camera assembly; wherein a lens of the camera assembly faces toward the forward direction of the robot, and a third reflective sheet is arranged at a front of the camera assembly, the third reflective sheet being configured to reflect back image data of the robot to the camera assembly.

In some embodiments, the robot further includes at least two camera assemblies; wherein at least one of the at least two camera assemblies is arranged on a first side of the robot, and at least one of the at least two camera assemblies is arranged on a second side of the robot.

In some embodiments, the robot has a forward end, and the ranging device is arranged on the forward end. The emitter component is configured to emit light toward a first side or a second side of the robot, and the light reflected by the first reflective sheet faces toward the forward direction of the robot, a lens of a camera assembly of the robot is arranged facing away from the forward direction of the robot, and an optical axis of the camera assembly is obliquely arranged to face away from the forward direction.

Compared with the related art, the present disclosure achieves the following beneficial effects:
The light emitted by the emitter component is reflected by the first reflective sheet and thus forms at least the first light and the second light, the first light and the second light define an included angle F therebetween, 0°<F<180°, and the first plane where the first light is located and a rotation axis of the first reflective sheet define an included angle G therebetween, G being any one of 0°, 180°, an acute angle, or an obtuse angle, such that the second light is deflected upward or downward relative to the first light. In the case that the second light is deflected upward, environmental features over the first light are detected; and in the case that the second light is deflected downward, environmental features under the first light are detected. In this way, 360-degree obstacle avoidance is achieved. Through cooperation of the first light, the second light, and the first reflective sheet, the ranging device achieves environmental perception and obstacle avoidance only by means of one emitter component and one receiver component. That is, in the present disclosure, no obstacle avoidance sensors are required, such that mounting steps are reduced, and manufacture and assembly efficiencies of the ranging device are enhanced. In the meantime, since top and bottom obstacle avoidance sensors are removed, the height of the ranging device is reduced, such that the ranging device is more compatible with low space ranging, and thus the manufacture cost of the ranging device is lowered while miniaturization of the ranging device is satisfied. Further, only one emitter component and one receiver component are arranged, such that detection of the obstacles is more sensitive. Moreover, by rotation of the first reflective sheet, the first light and the second light are reflected at different angles, such that the angle of field of the ranging device is increased, and thus environmental features within the space are conveniently acquired.

The above description only summarizes the technical solutions of the present disclosure. Specific embodiments of the present disclosure are described hereinafter to better and clearer understand the technical solutions of the present disclosure, to practice the technical solutions based on the disclosure of the specification, and to make the above and other objectives, features and advantages of the present disclosure more apparent and understandable.

### Brief Description of the Drawings

One or more embodiments are illustrated by way of example, and not by limitation, in the figures of the accompanying drawings, wherein components having the same reference numeral designations represent like components throughout. The drawings are not to scale, unless otherwise disclosed.
FIG. 1 is a schematic structural diagram of a ranging device according to some embodiments of the present disclosure;
FIG. 2 is a schematic structural diagram of a mounting portion (with a first end face facing upward) according to some embodiments of the present disclosure;
FIG. 3 is a schematic structural diagram of mounting portion (with a second end face facing upward) according to some embodiments of the present disclosure;
FIG. 4 is a schematic structural diagram of a ranging device according to some embodiments of the present disclosure;
FIG. 5 is a schematic structural diagram of a first reflective sheet according to some embodiments of the present disclosure;
FIG. 6 is a schematic diagram illustrating light reflection of a first reflective sheet according to some embodiments of the present disclosure;
FIG. 7 is a schematic diagram illustrating light reflection of a first reflective sheet according to some embodiments of the present disclosure;
FIG. 8 is a schematic structural diagram of a ranging device according to some embodiments of the present disclosure;
FIG. 9 is a schematic diagram illustrating light reflection of a first reflective sheet according to some embodiments of the present disclosure;
FIG. 10 is a schematic diagram illustrating light reflection of a first reflective sheet and a second reflective sheet according to some embodiments of the present disclosure;
FIG. 11 is a schematic structural diagram of a ranging device according to some embodiments of the present disclosure;
FIG. 12 is a top view of a ranging device according to some embodiments of the present disclosure;
FIG. 13 is a schematic structural diagram of a ranging device according to some embodiments of the present disclosure;
FIG. 14 is a first schematic diagram illustrating point clouds formed by first light and second light according to some embodiments of the present disclosure;
FIG. 15 is a schematic structural diagram of a ranging device according to some embodiments of the present disclosure;
FIG. 16 is an exploded view of a ranging device according to some embodiments of the present disclosure;
FIG. 17 is a top view of a ranging device according to some embodiments of the present disclosure;
FIG. 18 is a schematic detection diagram of a commutation signal according to some embodiments of the present disclosure;
FIG. 19 is a schematic structural diagram of a ranging device according to some embodiments of the present disclosure;
FIG. 20 is a schematic structural diagram of a photoelectric encoder disk and a detection assembly according to some embodiments of the present disclosure;
FIG. 21 is an exploded view of a ranging device (with a fourth wall portion opened) according to some embodiments of the present disclosure;
FIG. 22 is a top view of a robot according to some embodiments of the present disclosure; and
FIG. 23 is a schematic diagram illustrating light reflection of a robot according to some embodiments of the present disclosure.

Reference numerals and denotations thereof:
1000-robot;
100-ranging device;
10-mounting portion; 11-first mounting slot; 111-first opening; 12-second mounting slot; 121-second opening; 13-holder; 13a-first end face; 13b-second end face; 13c-third end face; 14-connection frame; 141-shaft hole; 142-accommodation slot; 15-base; 16-first wall portion; 17-second wall portion; 18-third wall portion; 19-fourth wall portion;
20-transceiver assembly; 21-emitter component; 22-receiver component; 221-optical filter;
30-first reflective sheet; 30a-first section; 30b-second section; 31-first portion; 32-second portion; 33-third portion; 310-second reflective sheet;
40-beam splitter;
50-camera assembly;
60-drive mechanism; 61-drive motor; 611-first annular groove; 62-transmission belt; 63-photosensitive element;
64-photoelectric encoder disk; 641-detection portion; 641a-zero position detection portion; 642-catch slot;
65-printed circuit board;
66-detection assembly;
70-bearing; 71-second annular groove;
80-diffuser;
90-deflector;
H-first light; J-second light; K-third light;
X-first direction; Y-second direction; Z-third direction; C-first side; D-second side; M-forward direction; L-forward plane.

### Detailed Description of the Embodiments

The embodiments containing the technical solutions of the present disclosure are described in detail with reference to the accompanying drawings. The embodiments hereinafter are only used to clearly describe the technical solutions of the present disclosure. Therefore, these embodiments are only used as examples, but are not intended to limit the protection scope of the present disclosure.

In the description of the present disclosure, the terms "first," "second," and the like are only used for distinguishing different objects, but shall not be understood as indication or implication of relative importance or implicit indication of the number of the specific technical features, the specific sequence or priorities. In the description of the embodiments of the present disclosure, the term "multiple" or "a plurality of" signifies at least two, unless otherwise specified.

In the description of the embodiments of the present disclosure, it should be understood that the terms "central," "transversal," "longitudinal," "upper," "lower," "front," "rear," "left," "right," "vertical," "horizontal," "top," "bottom," "inner," "outer," "axial," and the like indicate orientations and position relationships which are based on the illustrations in the accompanying drawings, and these terms are merely for ease and brevity of the description, instead of indicating or implying that the devices or elements shall have a particular orientation and shall be structured and operated based on the particular orientation. Accordingly, these terms shall not be construed as limiting the present disclosure.

In the description of the embodiments of the present disclosure, the term "and/or" is merely an association relationship for describing associated objects, which represents that there may exist three types of relationships. For example, the phrase "A and/or B" means (A), (B), or (A and B). In addition, the forward-slash symbol "/" generally represents an "or" relationship between associated objects before and after the symbol.

The terms "example" and "embodiment" in this specification signify that the specific characteristic, structures or features described with reference to the embodiments may be covered in at least one embodiment of the present disclosure. This term, when appearing in various parts of the specification, neither indicates the same embodiment, nor indicates an independent or optional embodiment that is exclusive of the other embodiments. In addition, technical features involved in various embodiments of the present disclosure described hereinafter may be combined as long as these technical features are not in conflict.

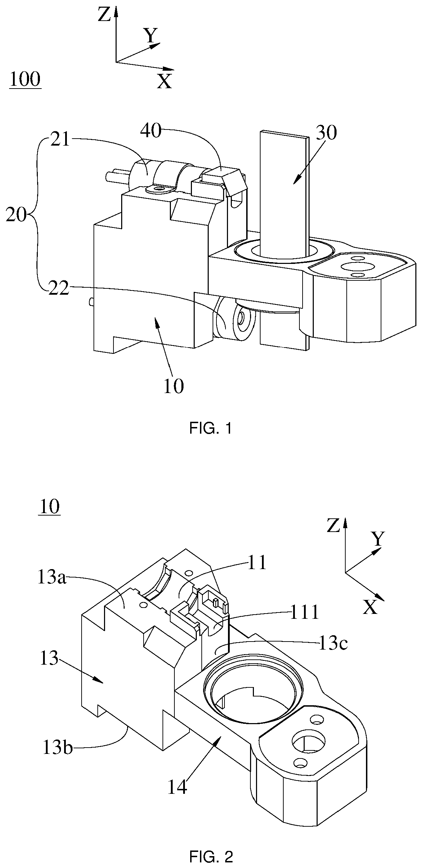

In a first aspect, some embodiments of the present disclosure provide a ranging device 100. Referring to FIG. 1, the ranging device 100 includes a mounting portion 10, a transceiver assembly 20, and a first reflective sheet 30. The transceiver assembly 20 is capable of emitting light and receiving light. The first reflective sheet 30 is capable of reflecting, toward different directions, the light emitted by the transceiver assembly 20.

With respect to the mounting portion 10, referring to FIG. 1 to FIG. 3, a first mounting slot 11 and a second mounting slot 12 are defined in the mounting portion 10. The first mounting slot 11 and the second mounting slot 12 are configured to mount the transceiver assembly 20. Optionally, the mounting portion 10 includes a holder 13 and a connection frame 14 connected to the holder 13. The holder 13 may be configured to mount the transceiver assembly 20. The connection frame 14 may be configured to mount the first reflective sheet 30. For example, the holder 13 includes a first end face 13a and a second end face 13b that are arranged oppositely in a third direction Z. The first mounting slot 11 may be defined in the first end face 13a. The second mounting slot 12 may be defined in the second end face 13b. The holder 13 further has a third end face 13c facing toward the connection frame 14. The third end face 13c is connected between the first end face 13a and the second end face 13b. The connection frame 14 is connected to the third end face 13c. The first reflective sheet 30 is rotatably arranged on the connection frame 14. The first mounting slot 11 extends through the third end face 13c to define a first opening 111, and the second mounting slot 12 extends through the third end face 13c to define a second opening 121.

With respect to the transceiver assembly 20, referring to FIG. 1, the transceiver assembly 20 includes an emitter component 21 and a receiver component 22. The emitter component 21 is configured to emit light, and the receiver component 22 is configured to receive light emitted by the emitter component 21 and reflected back by an object to be measured.

With respect to the emitter component 21, referring to FIG. 1 to FIG. 3, the emitter component 21 may be mounted in the first mounting slot 11, and the emitter component 21 is arranged facing toward the first reflective sheet 30. Light from the emitter component 21 may be emitted toward the first reflective sheet 30 via the first opening 111, such that the first reflective sheet 30 is capable of reflecting the light at and toward different angles. For example, the emitter component 21 includes a light emitter. The light emitter may be a vertical cavity surface emitting laser (VCSEL) or an edge-emitting laser (EEL). The light emitter may be configured as a light-emitting device, such as a laser diode, capable of emitting laser pulses for measurements.

The emitter component 21 may also adopt a line light source emitter, which is a device designed to emit a line light beam. Light emitted by the line light source emitter may form a straight-line light beam on the object to be measured. In some other embodiments, the emitter component 21 may also employ a surface light source emitter, which is capable of emitting light that may form a light surface on the object to be measured. It should be understood that the emitter component 21 may also use other devices capable of emitting light.

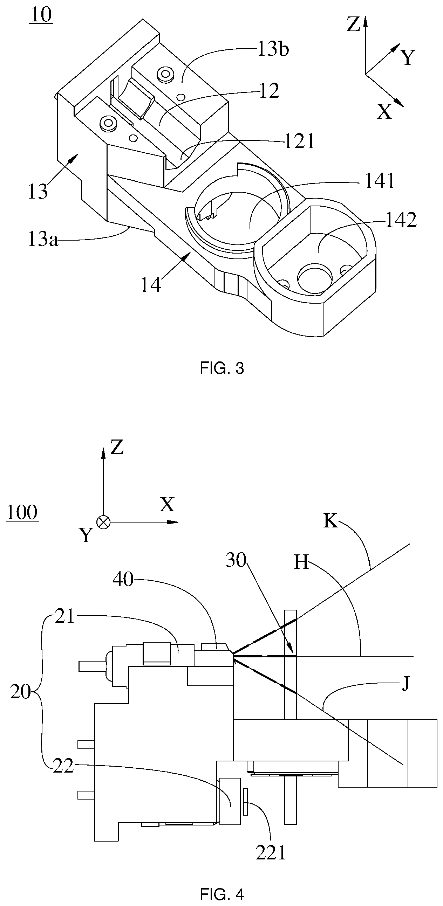

With respect to the receiver component 22, referring to FIGS. 3 and 4, the receiver component 22 may be mounted in the second mounting slot 12 and arranged facing toward the second opening 121. The receiver component 22 may be a CMOS/CCD image sensor. After the light emitted by the emitter component 21 is reflected back from the object to be measured, the reflected light may be received by the receiver component 22. The emitter component 21 and the receiver component 22 together form a radar module of the ranging device 100 for ranging.

Both the emitter component 21 and the receiver component 22 are mounted on the holder 13. A connection frame 14 is connected to the holder 13 and is positioned between the emitter component 21 and the receiver component 22. The first reflective sheet 30 is rotatably mounted on the connection frame 14. By separating the emitter component 21 from the receiver component 22 using the connection frame 14, mutual interference between emitted and received light is reduced, thereby improving ranging accuracy. Additionally, since the connection frame 14 is positioned between the emitter and receiver components, the problem that the height of the ranging device 100 is increased due the connection frame 14 arranged at the top or bottom is solved.

In some embodiments, referring to FIG. 4, a light receiving path of the receiver component 22 may include an optical filter 221. Light reflected from the object to be measured is capable of passing through the optical filter 221, which filters out ambient light and allows only light of a specific wavelength to pass through. For example, in the case that the emitter component 21 emits infrared light, the optical filter 221 permits only infrared light to pass, thereby reducing interference from other light and enhancing ranging accuracy.

Referring to FIGS. 1 and 4, a rotatable first reflective sheet 30 is arranged in a light emitting path of the emitter component 21. In the case that the emitter component 21 emits light toward the first reflective sheet 30, the first reflective sheet 30 is capable of reflecting the light at different angles. For example, the first reflective sheet 30 is mounted on the mounting portion 10. The connection frame 14 includes a shaft hole 141 (as illustrated in FIG. 3), wherein an axis of the shaft hole 141 is perpendicular to a first direction X (i.e., an axial direction of the shaft hole 141 is parallel to a third direction Z). the first reflective sheet is rotatably arranged within the shaft hole 141 and is capable of rotating within the shaft hole 141, wherein a rotation axis is parallel to the third direction Z.

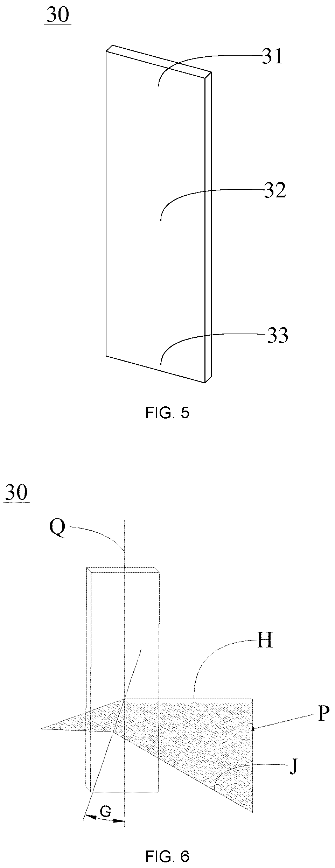

Optionally, referring further to FIG. 5, the first reflective sheet 30 includes a first portion 31 and a second portion 32 that are connected to each other. The second portion 32 is rotatably arranged within the shaft hole 141, and the first portion 31 extends, from an upper part of the shaft hole 141, upward out of the shaft hole 141. The first part 31 is capable of reflecting first light H and second light J. When the first reflective sheet 30 rotates, the first reflective sheet 30 is capable of reflecting the first light H and the second light J at different angles, such that an angle of field of the ranging device 100 is expanded, and hence multi-directional ranging is facilitated.

In some other embodiments, the first reflective sheet 30 further includes a third portion 33. The third portion 33 is connected to the second portion 32, and extends, from a lower part of the shaft hole 141, out of the shaft hole 141. After the first light H and the second light J are reflected back from the object to be measured, the first light H and the second light J may be reflected to the receiver component 22 at different angles, such that simultaneous measurements of two signal paths are implemented, and ranging efficiency is improved.

The light reflected by the first reflective sheet 30 includes at least the first light H and the second light J. The first light H and the second light J define a first plane P. The first plane and a rotation axis Q of the first reflective sheet 30 define an included angle F there between. The included angle G may be 0°, 180°, an acute angle, or an obtuse angle. That is, the first plane P is not perpendicular to the rotation axis Q of the first reflective sheet 30. In addition, an included angle F is defined between the first light H and the second light J, wherein 0°<F<180°. This allows the second light J to be deflected upward or downward relative to the first light H to detect an upper or lower environment.

It can be understood that when the emitter component 21 is a line light source emitter, as illustrated in FIG. 6, a line light beam emitted by the line light source emitter is capable of directly defining the first plane P in response to being reflected by the first reflective sheet 30. In the case that the emitter component 21 is a surface light source emitter, a surface light beam emitted by the surface light source emitter is capable of defining a plurality of planes. One of the planes which is not perpendicular to the rotation axis Q may be selected as the first plane P.

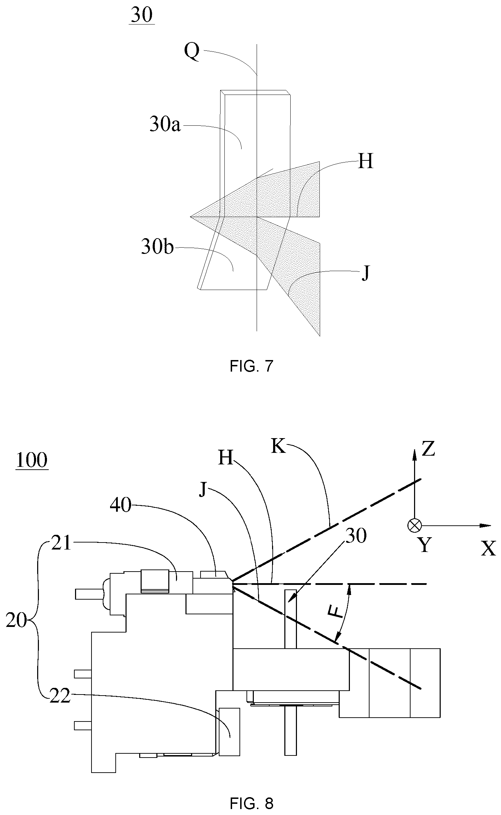

Optionally, referring to FIG. 7, the mirror of the first reflective sheet 30 may also be a non-planar mirror. The non-planar mirror is capable of splitting the light emitted by the emitter component 21 into at least the first light H and the second light J. For example, the first reflective sheet 30 includes a first section 30a and a second section 30b, wherein reflective surfaces of the first section 30a and the second section 30b are not parallel. For example, in the case that the emitter component 21 is a line light source emitter, a portion of the line light beam emitted by the line light source emitter is directly reflected by the first portion 31 to form the first light H, and another portion of the line light beam is reflected by the second portion 32 to form the second light J. The second light J is deflected upward or downward relative to the first light beam H. It may be understood that the emitter component 30 may also employ a point light source emitter or a surface light source emitter.

In the ranging device 100 according to the embodiments of the present disclosure, referring to FIG. 8, the first light H and the second light J may also be directly emitted by the emitter component 21. A rotatable first reflective sheet 30 is arranged on a light path of the emitter component 21. When the first reflective sheet 30 rotates, the first reflective sheet 30 reflects the second light J at different angles, and the reflected second light J is deflected upward or downward relative to the first light H. At this time, the emitter component 21 may employ two point light source emitters, which respectively emit the first light H and the second light J; or employ a line light source emitter, wherein a line light beam emitted by the line light source emitter includes the first light H and the second light J; or employ a surface light source emitter, wherein a surface light beam emitted by the surface light source emitter includes the first light H and the second light J.

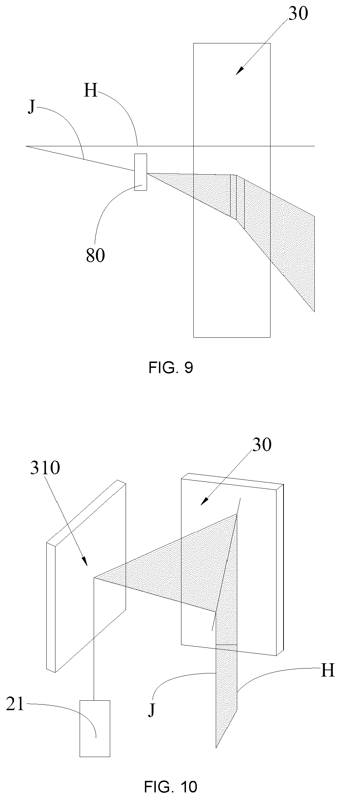

In some embodiments, referring further to FIG. 9, the ranging device 100 further includes a diffuser 80. The diffuser 80 is capable of diffusing the second light J into a line light beam, that is, diffusing a point light beam into a line light beam, and the line light beam is deflected upward or downward relative to the first light H. The light may be diffused into a line light beam using some optical diffusers, such as lenses, prisms, and optical fibers. By using a cylindrical lens or a focusing lens, the light may be focused into a line-shaped light beam. The shape and focal length of the lens may be selected as needed to achieve the desired line-shaped light beam. By appropriately designing and positioning prisms, the light may be refracted and reflected to form a line-shaped light beam, which may be achieved by adjusting the geometric shape and refractive angles of the prisms. An optical fiber is a very common device for diffusing light into a line-shaped light beam. The light inside the optical fiber propagates along the core, forming a line-shaped light beam. The features of the line-shaped light beam may be adjusted by modifying a core diameter and a refractive index of the fiber. It is important to note that the specific method and effect of diffusing light into a line-shaped light beam depend on the optical element used and the design parameters thereof. When selecting and using an optical element, appropriate choices should be made based on actual needs and application scenarios.

In some embodiments, the light emitted by the emitter component 21 also includes third light K, as illustrated in FIG. 4 or FIG. 8. Upon reflection from the first reflective sheet 30, the second light J is deflected downward relative to the first light H, and the third light K is deflected upward relative to the first light H. This allows the ranging device 100 to simultaneously detect both the lower and upper environments. For example, when the ranging device 100 moves to under a table, the first light H detects the front environment, the second light J detects ground beneath, and the third light K detects the area above the table. This facilitates obstacle avoidance from both the underside of the table and the ground, enabling multi-directional obstacle avoidance.

It may be understood that the third light K may be directly emitted by the emitter component 21 or reflected by the first reflective sheet 30. FIG. 4 illustrates reflection from the first reflective sheet 30, and FIG. 8 illustrates direct emission from the emitter component 21. Optionally, the emitter component 21 employs a line light source, and the first reflective sheet 30 is a non-planar mirror. The line light beam emitted by the line light source forms the first light H, the second light J, and the third light K in response to being reflected by the first reflective sheet 30.

In some embodiments, the ranging device 100 further includes one or a plurality of second reflective sheets 310. The second reflective sheet 310 may be configured to reflect the first light H and the second light J back to the first reflective sheet 30. The first reflective sheet 30, in cooperation with multiple second reflective sheets 310, may increase a range of angular adjustment for the first light H and the second light J. For example, referring to FIG. 10, through the reflection from the first reflective sheet 30 and the second reflective sheets 310, the first light H and the second light J may be reflected toward the rear of the emitter component 21 without being obstructed by the emitter component 21.

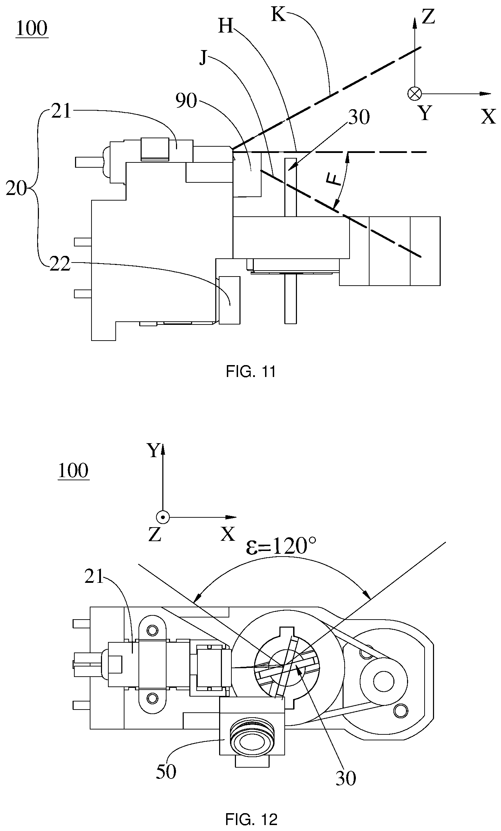

In some other embodiments, as illustrated in FIG. 11, a deflector 90 may also be used. The emitter component 21 faces the deflector 90, which is arranged at the first opening 111 (the first opening 111 is illustrated in FIG. 2). The emitter component 21 emits light toward the deflector 90. The deflector 90 has a reflective surface or a deflective lens. The light emitted by the emitter component 21 has an angle of field. A portion of the light may be emitted directly to form the first light H, and another portion of the light is either reflected downward by the reflective surface or refracted downward or upward by the deflection lens to form the second light J. It may be understood that there are various methods for splitting the light emitted by the emitter component 21 into the first light H and the second light J, which are not enumerated herein.

In some embodiments, the transceiver assembly 20 further includes a beam splitter 40. As illustrated in FIGS. 2 and 4, the beam splitter 40 may be arranged on a light exiting path of the emitter component 21. For example, the beam splitter 40 is arranged at the first opening 111. The beam splitter 40 is capable of splitting the light emitted by the emitter component 21 into at least the first light H and the second light J. In the case that the emitter component 21 employs a power transmitter, this reduces the need for an additional light emitter, thereby effectively reducing costs. The beam splitter 40 may employ a beam-splitting mirror, which is a coated glass. A thin film or a plurality of layers of thin films are coated on the surface of optical glass to form a coated glass. When a light beam is projected onto the coated glass, the light beam is divided into two or more light beams by reflection or refraction.

Referring to FIG. 8, some embodiments of the present application provide a ranging device 100. The ranging device 100 includes a transceiver assembly 20, a first reflective sheet, and a beam splitter 40. The transceiver assembly 20 includes an emitter component 21 configured to emit light and a receiver component 22 configured to receive light. A first reflective sheet 30 is rotatably arranged on a light path of the emitter component 21. When the first reflective sheet 30 rotates, the first reflective sheet 30 is capable of reflecting the light emitted by the emitter component 21 at different angles. The beam splitter 40 is configured to split the light reflected by the first reflective sheet 30 into at least first light H and second light J, wherein the second light J is deflected upward or downward relative to the first light H. The beam splitter 40 may employ a beam-splitting mirror, which is a coated glass. A thin film or a plurality of layers of thin films are coated on the surface of optical glass to form a coated glass. When a light beam is projected onto the coated glass, the light beam is divided into two or more light beams by reflection or refraction.

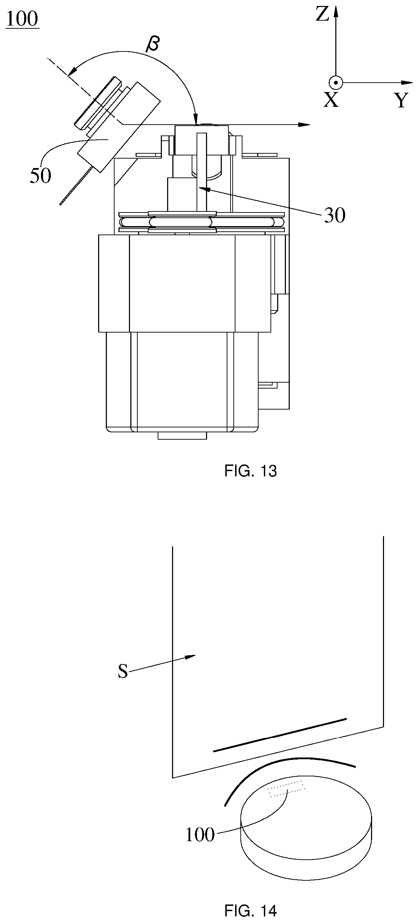

In some embodiments, referring to FIGS. 12 and 13, the ranging device 100 further includes a camera assembly 50. The camera assembly 50 is capable of capturing environmental features of a surrounding environment, and a first angle of field of the transceiver assembly 20 is partially overlapped withs or is not overlapped with a second angle of field of the camera assembly 50. The first angle of field of the camera assembly 50 complements the second angle of field the transceiver assembly 20.

For example, the transceiver assembly 20 emits the first light H and the second light J, which are reflected by the first reflective sheet 30 to form a the first angle of field ε in front of the device for detecting obstacles ahead. The camera assembly 50, facing the rear environment, is configured to capture environmental features of a rear environment. By complementing the front and rear perspectives, comprehensive environmental feature information from the surrounding space is acquired. Alternatively, the transceiver assembly 20 may be configured to detect the environmental features of the rear environment, and the camera assembly 50 may be configured to detect the environmental features of the front environment.

The camera assembly 50 includes a depth camera and/or an infrared camera. The depth camera is an imaging device capable of acquiring distance information of objects, and uses infrared light or other sensing technologies to measure the distance from the object's surface to the camera and converts these distance data into grayscale or color values on an image. By using the depth camera, three-dimensional perception and spatial positioning of objects in a scenario are achieved. The infrared camera is an imaging device that uses infrared radiation for imaging, and is capable of receiving and sensing radiation in the infrared spectrum, which is invisible to human eyes. The infrared camera operates based on the heat energy emitted by objects, which is converted into infrared radiation and then visualized as images or videos.

Optionally, the transceiver assembly 20 is configured to generate point cloud data of an environment with the first angle of field, the camera assembly 50 is configured to capture image data of an environment within the second angle of field, and the ranging device 100 performs navigation and obstacle avoidance based on the point cloud data and the image data. For example, the ranging device 100 may determine first mapping data from the point cloud data and determine second mapping data from the image data, and merge the first and second mapping data to obtain complete spatial data. For example, when the ranging device 100 moves indoors, the transceiver assembly 20 detects environmental features of the front environment. As the ranging device 100 continues to move closer to the wall, feature points of the front environment gradually decrease, thereby affecting its positioning and navigation. Meanwhile, the camera assembly 50 captures environmental features of the rear environment. As the ranging device 100 keeps moving, the camera assembly 50 may detect more information from behind which compensates for the shortcomings of the ranging device 100, thereby achieving a complementary effect between the front and rear. Upon acquisition of the laser point cloud of the front environment and the feature information extracted from the rear environment, the absolute position of the ranging device 100 in space may be determined.

Furthermore, as illustrated in FIG. 14, by scanning, the first light H forms a straight line of point cloud on the wall S which is used to detect the environmental features of the front environment, and the second light J is deflected downward, and the point cloud forms an curved line on the ground. The ranging device 100 may determine the proximity of obstacles based on the point cloud information from the second light J, which is directed diagonally downward. This enables the planning of an obstacle avoidance path, thereby achieving better mapping and obstacle avoidance effects.

It may be understood that when the ranging device 100 approaches a wall and turns around, the camera assembly 50 is closer to the wall, thus capturing fewer environment features; while the transceiver assembly 20, moving away from the wall, captures more environmental features of the environments, achieving front and rear complementary navigation for the movement of the ranging device 100.

Optionally, still referring to FIGS. 12 and 13, the camera assembly 50 may be arranged facing toward a rear upper side of the ranging device 100. For example, when observed along a second direction Y, an optical axis of the camera assembly 50 defines a second inclination angle β with respect to a horizontal plane, wherein 90°<β≤160°. In this embodiment, the first light H emitted by the transceiver assembly 20 may detect environmental features of the front environment, the second light J may detect environmental features of a front lower environment, while the camera assembly 50 can capture environmental features of a rear upper environment. In this way, complete spatial data of the entire surrounding environment may be acquired to facilitate path planning for obstacle avoidance.

Optionally, the light emitted by the emitter component 21 includes at least the first light H and the second light J. The first light H may be emitted along the first direction X, and the second light J may either be deflected downward with respect to the first light H or refracted upward relative to the first light H. For example, when the ranging device 100 moves along the horizontal direction for ranging, the first direction X is parallel to a horizontal plane, and the first light H may be parallel to the horizontal plane or define a small angle with the horizontal plane, wherein the angle may range from 0° to 2°. The first light H may then detect environmental features in the horizontal direction around. With respect to the second light J, when observed along the second direction Y, the first light H and the second light J define a first inclination angle F, wherein 0°≤F≤180°. This allows the second light J to be deflected either upward or downward relative to the first light H. When the second light J is deflected downward, the second light J is enabled to detect environmental features of the front lower environment of the ranging device 100, such that lower obstacles are detected for obstacle avoidance. Alternatively, when the second light J is deflected upward, the second light J is enabled to detect environmental features of the upper environment, such that omnidirectional ranging and obstacle avoidance are achieved.

Furthermore, the focal lengths of the first light H and the second light J may be set according to the actual situation. For example, the first light H, which is emitted over a longer distance, may employ a long-focus lens, while the second light J, which strikes the ground and is closer to the transceiver assembly 20, may employ a short-focus lens. In this configuration, the first direction X, the second direction Y, and the third direction Z are mutually perpendicular, with an error margin of 0° to 5° considered as negligible for perpendicularity.

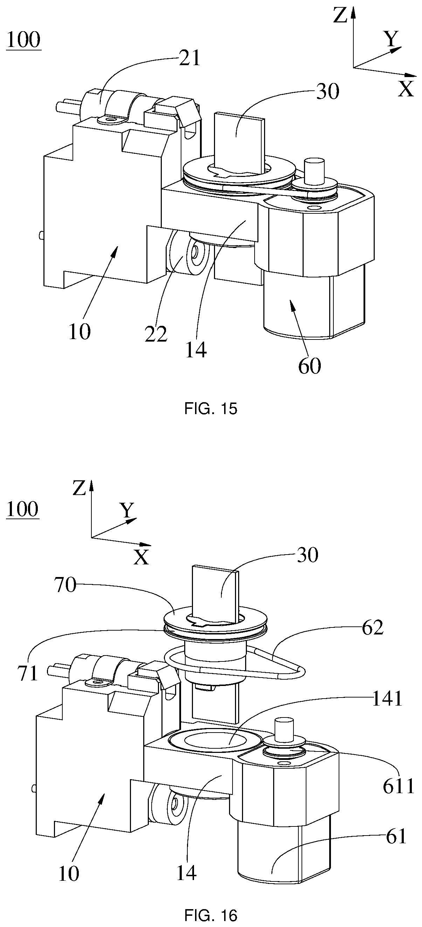

Referring to FIGS. 15 and 16, the ranging device 100 further includes a drive mechanism 60. The drive mechanism 60 is transmissively connected to the first reflective sheet 30 and is configured to drive the first reflective sheet 30 to rotate. The drive mechanism 60 is mounted on the mounting portion 10. For example, the drive mechanism 60 is mounted on the connection frame 14 of the mounting portion 10. Optionally, the drive mechanism 60 includes a drive motor 61 and a transmission belt 62. A specific accommodation slot 142 (referring to FIG. 3) is defined in the connection frame 14. The drive motor 61 is secured into the accommodation slot 142, and an output shaft of the drive motor 61 extends out of the accommodation slot 142.

A first annular groove 611 is defined in an outer surface of the output shaft of the drive motor 61 (not illustrated in the drawings). A bearing 70 is arranged in the shaft hole 141 in the connection frame 14. The first reflective sheet 30 is secured in the bearing 70. The bearing 70 partially extends out of the shaft hole 141, and a second annular groove 71 is defied in an outer surface of the portion that extends out of the shaft hole 141. The transmission belt 62 is fitted around the first annular groove 611 and the second annular groove 71. Under the drive of the drive motor 61, the transmission belt 62 moves, such that the bearing 70 is driven to rotate. In this way, the first reflective sheet 30 rotates.

For each degree of rotation of the transceiver assembly 20, the first light H, the second light J, and the third light K may be reflected by the first reflective sheet 30 to shift by a corresponding angle. In some embodiments, the ranging device 100 further includes a processing module (not illustrated in the drawings). Within a predetermined rotation angle of the first reflective sheet 30, the processing module is configured to acquire measurement data obtained by scanning with the first light H, the second light J, or the third light K. Within each rotation cycle of the first reflective sheet 30, the processing module acquires at least two sets of measurement data. For example, in the case that the ranging device 100 moves along a corner of a wall and needs to detect the wall surface and obstacles in front, the processing module only needs to acquire ranging data within a predetermined angle range.

Referring to FIGS. 11 and 12, in the case that the first reflective sheet 30 rotates between 15° and 75° (with a starting angle being an angle when the first reflective sheet 30 faces the emitter component 21), the first reflective sheet 30 reflects the lights, forming an angle of field ε = 120° in front. This angle of field ε may also cover the environmental features of the front environment. The processing module acquires ranging data from the first reflective sheet 30 within this rotation range, such that environmental feature information is acquired for planning a movement path of the ranging device 100.

When the first reflective sheet 30 includes two reflective surfaces, and these reflective surfaces are respectively arranged on two sides of the rotation axis of the first reflective sheet 30, the processing module acquires at least two sets of measurement data for each rotation cycle of the first reflective sheet 30. For example, measurement data is acquired once in response to a rotation about between 15° and 75°, and again in response to a rotation between 195° and 255°.

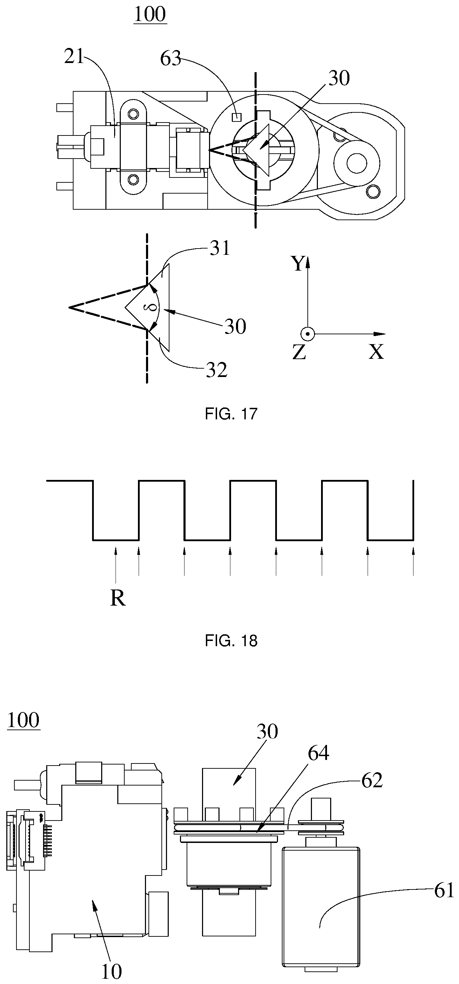

Optionally, in some other embodiments, referring further to FIG. 17, the two reflective surfaces are a first reflective surface 31 and a second reflective surface 32, and a third inclination angle δ is defined between the first reflective surface 31 and the second reflective surface 32. In this case, the two reflective surfaces are no longer arranged oppositely, and the third inclination angle between them may be set as 0°<δ<180°, for example, δ may be 45°. In the case that the first light H faces a space between the first reflective surface 31 and the second reflective surface 32, since the first light H also has an angle of field, a portion of the first light H is reflected forward by the first reflective surface 31, and another portion of the first light H is reflected backward by the second reflective surface 32. In this way, environmental feature information may be simultaneously obtained for both the front and rear environments, which facilitates the planning of the movement path. It may be understood that the magnitude of the third inclination angle δ may be defined or set based on the specific application scenario, which is not limited in the present disclosure.

Furthermore, the first reflective sheet 30 includes a plurality of reflective planes, which are arranged around the rotation axis of the first reflective sheet 30. Configuration of the plurality of reflective planes increases the measurement frequency, thereby improving the measurement accuracy.

In some embodiments, the ranging device 100 further includes a detection assembly 66. The detection assembly 66 is part of the processing module. The detection component 66 is arranged on the mounting portion 10 and is connected to the drive mechanism 60. The detection assembly 66 is configured to detect a commutation signal of the drive mechanism 60 to acquire a rotation angle and a rotation speed of the first reflective sheet 30. The drive motor 61 may employ a direct current brushless motor. Since a commutation signal of the direct current brushless motor is uniform, it is hard to distinguish a zero-degree angle of the first reflective sheet 30. Therefore, in some embodiments, a first identification portion (not illustrated in the drawings) is arranged on the drive mechanism 60. In the case that the first reflective sheet 30 rotates to a predetermined position, the detection assembly 66 is configured to detect the first identification portion to determine a start angle and the rotation speed of the first reflective sheet 30. By directly detecting the rotation angle and the rotation speed based on the commutation signal, the traditional photoelectric encoder disk may be omitted, thereby further reducing the size of the ranging device 100.

The first identification portion may be arranged on the rotor of the drive motor 61 (not illustrated in the drawings). In this embodiment, the transmission is accomplished via the transmission belt 62, wherein the angle of rotation of the rotor corresponds to the rotation angle of the first reflective sheet 30. The first identification portion is different from other parts of the rotor. For example, the first identification portion is formed by coloring on the rotor or defining a groove in the rotor. The first identification portion may serve as a zero-degree angle of rotation of the first reflective sheet 30. In the case that the detection assembly 66 detects the first identification portion, using the first identification portion as the zero-degree angle (in this embodiment, the angle when the first reflective sheet 30 faces the first light H is preferably used as the zero-degree angle), time for rotation in one period (that is, when the first identification portion is detected for a second time) is recorded, and the rotation speed of the rotation portion may be calculated based on a total rotation angle and the time within one period.

The detection assembly 66 may determine an angle value corresponding to each commutation signal according to a commutation count within one period of the drive motor 61 to determine the rotation angle of the first reflective sheet 30. In some embodiments, a micro-controller unit (MCU) (not illustrated in the drawings) is arranged on the detection assembly 66. The MCU is configured to detect the commutation signal of the drive motor 61, and calculate the rotation speed and angle of the first reflective sheet 30 based on the commutation signal. Specifically, the detection assembly 66 determines an angle variation value between two adjacent commutation signals based on a total rotation angle and the commutation count within one period; determines a start angle in response to detecting the first identification portion; and each time a commutation signal is detected, determines, based on the angle variation value, a real-time angle value corresponding to the commutation signal. For example, in the case that the drive motor 61 employs a direct current brushless motor, 14 commutation signals are generated upon one-turn rotation (one period), the MCU records a total time of the 14 signals, and hence a period and frequency of rotation of the drive motor 61 may be known. Each time 14 signals are generated, the drive motor 61 has rotated by 360/14=25.7 degrees. In the case that the zero point (zero-degree angle, that is, the first identification portion is detected), the angle is cleared, and hence the real-time angle values corresponding to the commutation signals of the drive motor 61 are calculated. By this approach, the angle values corresponding to the commutation signals are simply acquired. That is, the rotation angle of the first reflective sheet 30 is acquired.

With respect to angle value detection at other moments, the detection assembly 66 may acquire a time difference between a current time and a previous commutation signal; calculate a product of the time difference and the rotation speed; and determine a sum of an angle value corresponding to the previous commutation signal and the product as a real-time angle value corresponding to a non-commutation signal. For example, referring to FIG. 18, R is marked as a zero-degree angle position, and each raising edge and each falling edge may be both set to a fixed angle. In the case that no commutation signal is triggered, an instantaneous angle is a sum of an angle at a previous frame and a product of a time difference at the previous frame and the rotation speed, that is, angleN (instantaneous angle)=angleO (angle of the previous frame)+speeds (rotation speed)*TIME (time difference). By this approach, the angles at various moments of the first reflective sheet 30 may be conveniently and accurately acquired.

In some other embodiments, referring to FIGS. 16 and 17, the ranging device 100 further includes a photosensitive element 63. The photosensitive element 63 may be arranged on the mounting portion 10, and is connected to the detection assembly 66. In the case that the first reflective sheet 30 rotates to a second predetermined position, the first reflective sheet 30 reflects light toward the photosensitive element 63. The detection assembly 66 determines the rotation start angle and the rotation speed of the first deflective sheet 30 based on the light detected by the photosensitive element 63. For example, in the case that the first light beam H directly faces the first reflective sheet 30, the first reflective sheet 30 precisely reflects the light to the photosensitive element 63. In this case, the rotation start angle of the first reflective sheet 30 is recorded. In the case that the first reflective sheet 30 is equipped with a plurality of reflective surfaces, the photosensitive element 63 may detect the light multiple times within one rotation cycle. For example, in the case that the first reflective sheet 30 has four reflective surfaces and the photosensitive element 63 detects light five times, the first reflective sheet 30 has completed one rotation cycle. The rotation speed and rotation angle may then be calculated based on the cycle.

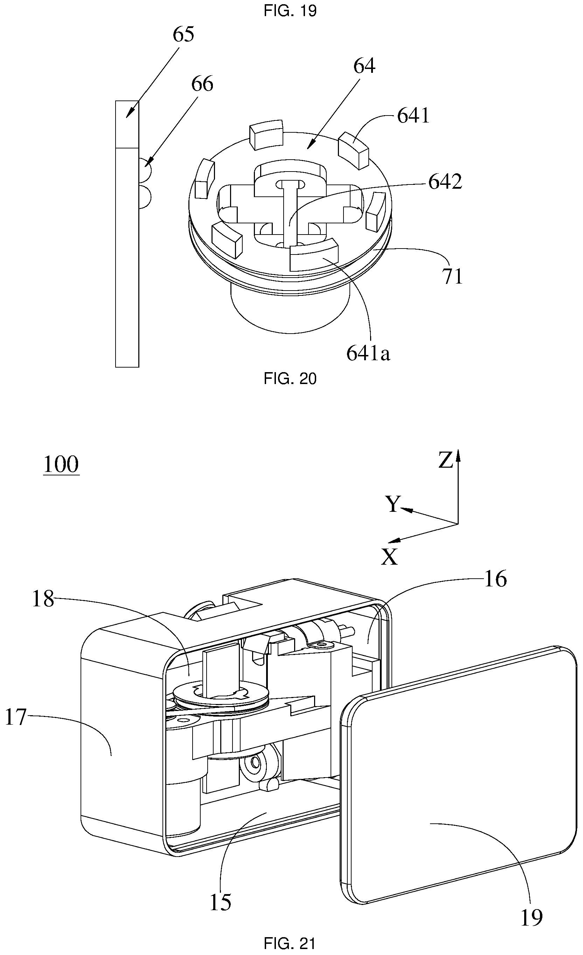

Referring to FIGS. 19 and 20, the ranging device 100 further includes a detection assembly 66, a photoelectric encoder disk 64, and a drive mechanism 60. A second annular groove 71 is defined in an outer circumferential surface of the photoelectric encoder disk 64. The transmission belt 62 is fitted into the second annular groove 71, and the drive mechanism 60 drives the photoelectric encoder disk 64 to rotate. The first reflective sheet 30 may be arranged on the photoelectric encoder disk 64. For example, the photoelectric encoder disk 64 has a catch slot 642 adaptive to the first reflective sheet 30, and the first reflective sheet 30 is engaged and secured within the slot 642, such that the first reflective sheet 30 is enabled to rotate with the photoelectric encoder disk 64.

The photoelectric encoder disk 64 is equipped with a plurality of detection portions 641, which may be code teeth secured to the photoelectric encoder disk 64. These code teeth are arranged in a circle. The processing module and the detection assembly 66 may be mounted on a printed circuit board 65, which is capable of detecting the detection portions 641. The printed circuit board 65 is secured to the mounting portion 10. The detection assembly 66 is capable of determining the rotation start angle, the rotation angle, and the rotation speed of the first reflective sheet 30 based on the detected detection portion 641. For example, the detection assembly 66 includes a photoelectric emitter (not illustrated in the drawings) and a photoelectric receiver arranged opposite to the photoelectric emitter (not illustrated in the drawings). The photoelectric emitter emits a detection signal toward the photoelectric receiver. During the rotation of the photoelectric encoder disk, a plurality of detection portions 641 pass sequentially through the spacing, such that the photoelectric receiver generates a periodically varying level signal. For example, in the case that six detection portions 641 are arranged, each time a level signal is detected, it is determined a 60-degree rotation is completed, and rotation for one full rotation cycle is completed in the case that six level signals are detected, and thus the rotation start angle is determined. In this way, the rotation speed may be determined based on the rotation angle within a unit time.

Referring to FIG. 20, one of the detection portions 641 may be configured as a zero position detection portion 641a, which has a size different from the other detection portions. In the case that the zero position detection portion 641a is detected, a zero position angle of the first reflective sheet 30 may be directly determined, such that the computational load is reduced, and the start angle, the rotation angle, and the rotation speed of the first reflective sheet 30 are rapidly determined.

Optionally, the photoelectric emitter and the photoelectric receiver may be arranged on the same side, for example, with both the photoelectric emitter and the photoelectric receiver facing the rotation path of the detection portions 641. The level signal emitted by the photoelectric emitter is returned by the detection portion 641 and received by the photoelectric receiver, such that the detection portion 641 is determined.

It may be understood that the detection assembly 66 may also employ other detectable devices, such as photoelectric couplers, or the like. In this embodiment, the photoelectric encoder disk 64 is integrally molded with the bearing, which helps reduce the space required, such that the compact design requirements of the ranging device 100 are met.

Referring to FIG. 21, the ranging device 100 further includes a base 15 and a mounting frame (not illustrated in the drawings) mounted on the base 15. The holder 13 and the connection frame 14 described above may be both arranged within the mounting frame. The mounting frame includes a first wall portion 16, a second wall portion 17, a third wall portion 18, and a fourth wall portion 19. The first wall portion 16 and the second wall portion 17 are arranged oppositely in the first direction X. The third wall portion 18 and the fourth wall portion 19 are connected between the first wall portion 16 and the second wall portion 17, with the third wall portion 18 and the fourth wall portion 19 arranged oppositely in the second direction Y. This arrangement forms a rectangular frame structure.

The emitter component 21 and the receiver component 22 are arranged on an inner wall of the first wall portion 16, for example, connected to the inner wall of the first wall portion 16 via the holder 13. The third wall portion 18 and/or the fourth wall portion 19 is configured to allow the passage of the first light H, the second light J, and the third light K. Alternatively, the emitter component 21 and the receiver component 22 may be secured to the base 15 and positioned within the mounting frame. In the case that the first reflective sheet 30 rotates, the first light H and the second light J are allowed to pass through the third wall portion 18 and/or the fourth wall portion 19, thereby facilitating ranging operations. Optionally, the first wall portion 16 and the second wall portion 17 may also be configured to allow the passage of the first light H, the second light J, and the third light K, such that the light is capable of being emitted or collected at or from various directions.

Furthermore, the first wall portion 16, the second wall portion 17, the third wall portion 18, and the fourth wall portion 19 may also be made of a light-filter material, which is capable of filtering ambient light and allowing light of a specific wavelength to pass through. For example, in the case that the emitter component 21 emits infrared light, the filter material only allows the infrared light to pass through, thereby reducing the interference from other light, and improving the ranging accuracy.

In the embodiments of the present disclosure, the light emitted by the emitter component 21 is reflected by the first reflective sheet 30 and thus forms at least the first light H and the second light J, the first light H and the second light J define an included angle F therebetween, 0°<F<180°, and the first plane wherein the first light H is located and the rotation axis of the first reflective sheet define an included angle G therebetween, G being any one of 0°, 180°, an acute angle, or an obtuse angle, such that the second light J is deflected upward or downward relative to the first light H. In the case that the second light is deflected upward, environmental features over the first light are detected; and in the case that the second light is deflected downward, environmental features under the first light are detected. In this way, 360-degree obstacle avoidance is achieved. Through cooperation of the first light H, the second light J, and the first reflective sheet 30, the ranging device 100 achieves environmental perception and obstacle avoidance only by means of one emitter component 21 and one receiver component 22. That is, in the present disclosure, no obstacle avoidance sensors are required, such that mounting steps are reduced, and manufacture and assembly efficiencies of the ranging device 100 are enhanced. In the meantime, since top and bottom obstacle avoidance sensors are removed, the height of the ranging device 100 is reduced, such that the ranging device 100 is more compatible with low space ranging, and thus the manufacture cost of the ranging device 100 is lowered while miniaturization of the ranging device 100 is satisfied. Further, only one emitter component 21 and one receiver component 22 are arranged, such that detection of the obstacles is more sensitive. Moreover, by rotation of the first reflective sheet 30, the first light H and the second light J are reflected at different angles, such that the angle of field of the ranging device 100 is increased, and thus environmental features within the space are conveniently acquired.

In a second aspect, some embodiments of the present disclosure further provide a robot 1000. The robot 1000 includes the ranging device 100 according to any embodiment of the first aspect.

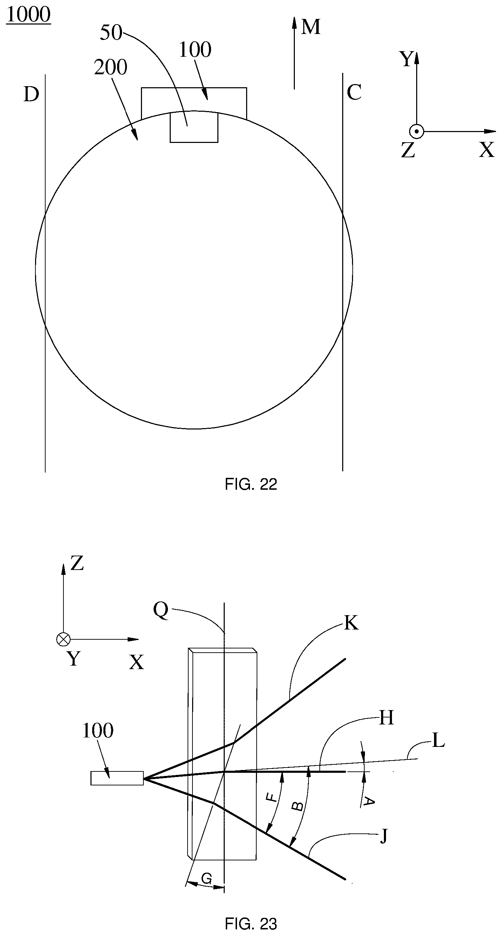

Referring to FIGS. 22 and 23, the robot 1000 includes a first side C and a second side D that are arranged oppositely along the first direction X. The transceiver assembly 20 is configured to emit the first light H, the second light J, and the third light K toward the first side C or the second side D; alternatively, the light emitted by the transceiver assembly 20 is reflected by the first reflective sheet 30 to form the first light H, the second light J, and the third light K. In the case that the first reflective sheet 30 rotates, the first light H and the second light J are reflected toward a forward direction M of the robot, such that information about the front environment is acquired. In the embodiments of the present application, the forward direction M is preferably parallel to the second direction Y, with an error of 0° to 5° considered acceptable as parallel. In some other embodiments, the forward direction M may define an angle with the second direction Y. It may be understood that in the case that the forward direction M is parallel to the second direction Y and the first light H is parallel to the first direction X, it is more advantageous for angle calculation, thereby reducing the computational load.

In some other embodiments, the robot has a forward end, and the ranging device 100 is arranged at the forward end. The emitter component 21 emits light toward the left or right side of the robot (i.e., toward the first side C or the second side D), and after being reflected by the first reflective sheet 30, the light faces the forward direction M of the robot. The lens of the camera assembly 50 of the robot is arranged opposite to the forward direction M, with the optical axis of the camera assembly 50 inclined away from the forward direction M.

The camera assembly 50 may be oriented toward the robot's 1000 rearward direction, while the transceiver assembly 20 detects environmental features of the front environment. The camera assembly 50 captures environmental features of the rear environment behind the robot. For example, when the robot 1000 is performing a cleaning task and moving continuously, the robot gradually approaches a wall. As the environmental features detected by the transceiver assembly 20 decrease, the camera assembly 50 is capable of capturing more information from the rear environment, compensating for the shortcomings of the transceiver assembly 20. This enables a complementary system for both the front and rear environments. Upon acquisition of the front laser point cloud and the feature information extracted from the rear environment by the camera assembly 50, the absolute position of the robot in space may be determined, thereby facilitating the planning of the movement path.

The camera assembly 50 may also be oriented toward the forward direction of the robot, with the angle of field being partially overlapped with the angle of field of the transceiver assembly 20. The camera assembly 50 may be configured to assist with front ranging. The camera assembly 50 may also be oriented toward the first side C or second side D, and may be configured to assisting with ranging on those sides. The camera assembly 50 may also be oriented upward, and may be configured to assist with upward ranging. It may be understood that the camera assembly 50 may be oriented in any upward direction as long as the camera assembly is capable of assisting with ranging. A plurality of such camera assemblies 50 may be arranged, for example, at least two camera assemblies 50. At least one camera assembly 50 is arranged on the first side C of the robot 1000, and at least one camera assembly 50 is arranged on the second side D of the robot 1000, thereby facilitating multi-directional assistant ranging. Similarly, a camera assembly 50 may be arranged in each of the forward direction, the backward direction, and the upward direction, or the like of the robot 1000 to assist with omnidirectional ranging.

Optionally, the lens of the camera assembly 50 is oriented toward the forward direction of the robot 1000, and a third reflective sheet is arranged in front of the camera assembly 50. The third reflective sheet is configured to reflect image data of the rearward direction of the robot 1000 to the camera assembly 50. The camera assembly 50 may partially detect the front environment. Since the third reflective sheet is arranged in front of the camera assembly 50, the camera assembly 50 is also capable of detecting the rearward environment based on the light reflected back from the first reflective sheet, thereby achieving complementary ranging for both the front and rear environments.

Optionally, in the case that the first reflective sheet 30 rotates, the first reflective sheet 30 reflects the first light H at a first predetermined angle and reflects the second light J at a second predetermined angle. Referring to FIG. 23, when observed along the second direction Y, the first predetermined angle is an angle defined between the first light H and a forward plane L (where the forward plane is the horizontal plane in which the robot moves, parallel to the surface on which the robot moves), and the first predetermined angle is A, wherein 0°≤A≤2°. When observed along the second direction Y, the second predetermined angle is an angle defined between the second light J and the forward plane L, and the second predetermined angle is B, wherein preferably 1°≤B≤30°. An angle between the third light K and the forward plane L may be similarly set.

Optionally, the first light H and the second light J may also be emitted toward the front environment, and the reflection may direct the first light H and the second light J toward the left or right side to detect the environmental features on the left or right. For example, when the robot 1000 moves against a wall, the light may be reflected onto the left or right wall to acquire environmental features of the wall, such that the robot 1000 is planned to move along the wall.

Finally, it should be noted that the above embodiments are merely used to illustrate the technical solutions of the present disclosure rather than limiting the technical solutions of the present disclosure. Under the concept of the present disclosure, the technical features of the above embodiments or other different embodiments may be combined, the steps therein may be performed in any sequence, and various variations may be derived in different aspects of the present disclosure, which are not detailed herein for brevity of description. Although the present disclosure is described in detail with reference to the above embodiments, persons of ordinary skill in the art should understand that they may still make modifications to the technical solutions described in the above embodiments, or make equivalent replacements to some of the technical features; however, such modifications or replacements do not cause the essence of the corresponding technical solutions to depart from the spirit and scope of the technical solutions of the embodiments of the present disclosure.

## Claims

1. A ranging device, **characterized in that**, comprising: a transceiver assembly and a first reflective sheet;
wherein the transceiver assembly comprises an emitter component configured to emit light and a receiver component configured to receive light;
wherein a rotatable first reflective sheet is arranged on a light path of the emitter component, wherein the first reflective sheet reflects, at different angles, the light emitted by the emitter component, the reflected light comprising at least first light and second light, the first light and the second light defining a first plane;
wherein the first light and the second light define an included angle F there between, 0°<F<180°;
wherein the first plane and a rotation axis of the first reflective sheet define an included angle G there between, G being any one of 0°, 180°, an acute angle, or an obtuse angle.

2. The ranging device according to claim 1, **characterized in that**, the emitter component is a line light source emitter, wherein at least a portion of light emitted by the line light source emitter is reflected by the first reflective sheet to define the first plane; or
the emitter component is a surface light source emitter, wherein at least a portion of light emitted by the surface light source emitter is reflected by the first reflective sheet to define the first plane.

3. The ranging device according to claim 1, **characterized in that**, a mirror of the first reflective sheet is a non-planar mirror, wherein the non-planar mirror is capable of splitting the light emitted by the emitter component into at least first light and second light, the second light being deflected upward or downward relative to the first light.

4. A ranging device, **characterized in that**, comprising: a transceiver assembly and a first reflective sheet;
wherein the transceiver assembly comprises an emitter component configured to emit light and a receiver component configured to receive light, wherein the light emitted by the emitter component comprises at least first light and second light;
wherein a rotatable first reflective sheet is arranged on a light path of the emitter component, wherein the first reflective sheet, when rotating, reflects the second light at different angles, the reflected light being deflected upward or downward relative to the first light.

5. The ranging device according to claim 4, **characterized in that**, the first light is parallel to the first light; and
the ranging device further comprises a diffuser, wherein the diffuser is configured to diffuse the second light into a line-shaped beam, the line-shaped beam being deflected upward or downward relative to the first light.

6. The ranging device according to any one of claims 1 to 4, **characterized in that**, the light emitted by the emitter component further comprises third light, wherein upon reflection by the first reflective sheet, the second light is deflected downward relative to the first light, and the third light is deflected upward relative to the first light.

7. The ranging device according to any one of claims 1 to 5, **characterized in that**, the transceiver assembly further comprises one or a plurality of second reflective sheets, wherein the second reflective sheet is configured to reflect the first light and the second light to the first reflective sheet.

8. The ranging device according to claim 1 or 4, **characterized in that**, the transceiver assembly further comprises a beam splitter, wherein the beam splitter is arranged on a light-exit path of the emitter component, and is configured to split the light emitted by the emitter component into at least the first light and the second light.

9. The ranging device according to claim 1 or 4, **characterized in that**, the transceiver assembly further comprises a deflector, wherein the emitter component is arranged facing toward the deflector, a portion of the light emitted by the emitter component forms the first light, and another portion of the light emitted by the emitter component is deflected upward or downward via the deflector to form the second light.

10. A ranging device, **characterized in that**, comprising: a transceiver assembly, a first reflective sheet, and a beam splitter;
wherein the transceiver assembly comprises an emitter component configured to emit light and a receiver component configured to receive light;
wherein a rotatable first reflective sheet is arranged on a light path of the emitter component, wherein the first reflective sheet reflects, at different angles, the light emitted by the emitter component; and
wherein the beam splitter is configured to split the light reflected by the first reflective sheet into at least first light and second light, the second light being deflected upward or downward relative to the first light.

11. The ranging device according to any one of claims 1 to 10, **characterized in that**, further comprises a camera assembly; wherein the camera assembly comprises a depth camera and/or an infrared camera;
a first angle of field of the transceiver assembly is partially overlapped with or not overlapped with a second angle of field of the camera assembly; and
the transceiver assembly is configured to generate point cloud data of an environment with the first angle of field, the camera assembly is configured to capture image data of an environment within the second angle of field, and the ranging device performs navigation and obstacle avoidance based on the point cloud data and the image data.

12. The ranging device according to any one of claims 1 to 11, **characterized in that**, the first reflective sheet comprises a plurality of reflective planes, wherein the plurality of reflective planes are arranged around a rotation axis of the first reflective sheet.

13. The ranging device according to any one of claims 1 to 11, **characterized in that**, the first reflective sheet comprises two reflective surfaces, wherein the two reflective surfaces are respectively arranged on two sides of the rotation axis of the first reflective sheet.

14. The ranging device according to any one of claims 1 to 13, **characterized in that**, further comprises: a mounting portion; wherein the mounting portion comprises a holder and a connection frame connected to the holder, the emitter component and the receiver component are both mounted on the holder, the connection frame is connected to the holder, and is arranged between the emitter component and the receiver component, and the first reflective sheet is rotatably arranged on the connection frame.

15. The ranging device according to any one of claims 1 to 13, **characterized in that**, further comprises: a mounting portion, a base, and a mounting frame mounted on the base; wherein the mounting frame comprises a first wall portion, a second wall portion, a third wall portion, and a fourth wall portion, wherein the first wall portion and the second wall portion are arranged oppositely in a first direction, the third wall portion and the fourth wall portion are both connected between the first wall portion and the second wall portion, and the third wall portion and the fourth wall portion are arranged oppositely in a second direction;
wherein the emitter component and the receiver component are both arranged on an inner wall of the first wall portion, or the emitter component and the receiver component are both secured to the base and are positioned inside the mounting frame; and
the third wall portion and/or the fourth wall portion are configured to allow transmission of the light emitted by the emitter component.

16. The ranging device according to any one of claims 1, 4, and 10, **characterized in that**, further comprises: a processing module; wherein within a predetermined rotation angle of the first reflective sheet, the processing module is configured to acquire measurement data by scanning using the light emitted by the emitter component; and
within each rotation cycle of the first reflective sheet, the processing module acquires at least two sets of the measurement data.

17. The ranging device according to any one of claims 1 to 15, **characterized in that**, further comprises: a drive mechanism mounted on the mounting portion; wherein the drive mechanism is transmissively connected to the first reflective sheet, and is configured to drive the first reflective sheet to rotate;
wherein the ranging device further comprises a detection assembly, wherein the detection assembly is arranged in the mounting portion and is connected to the drive mechanism, and the detection assembly is configured to detect a commutation signal of the drive mechanism to acquire a rotation angle and a rotation speed of the first reflective sheet; and
a first identification portion is arranged on the drive mechanism, and in the case that the first reflective sheet rotates to a first predetermined position, the detection assembly is configured to detect the first identification portion to determine a rotation start angle of the first reflective sheet.

18. The ranging device according to any one of claims 1 to 15, **characterized in that**, further comprises: a detection assembly, a photoelectric encoder disk, and a drive mechanism; wherein the first reflective sheet is arranged on the photoelectric encoder disk, and the drive mechanism is configured to drive the photoelectric encoder disk to rotate;
wherein a plurality of detection portions are arranged on the photoelectric encoder disk; and the detection assembly is configured to detect the detection portion, and determine a rotation start angle, a rotation angle, and a rotation speed of the first reflective sheet based on the detected detection portion.

19. The ranging device according to any one of claims 1 to 18, **characterized in that**, further comprises: a photosensitive element; wherein in the case that the first reflective sheet rotates to a second predetermined position, the first reflective sheet reflects light toward the photosensitive element, and the photosensitive element determines a rotation start angle and a rotation speed of the first reflective sheet based on the detected light.

20. A robot, **characterized in that**, comprising: the ranging device as defined in any one of claims 1 to 19.

21. The robot according to claim 20, **characterized in that**, the robot has a first side and a second side that are arranged oppositely in a first direction; wherein the transceiver assembly is configured to emit light toward the first side or the second side; and the first reflective sheet rotates such that the first reflective sheet reflects the light toward a forward direction or a backward direction of the robot.

22. The robot according to claim 20, **characterized in that**, further comprises: a camera assembly; wherein a lens of the camera assembly faces toward a forward direction, a backward direction, a first side, a second side, or an upward direction of the robot.

23. The robot according to claim 20, **characterized in that**, further comprises: a camera assembly; wherein a lens of the camera assembly faces toward a forward direction of the robot, and a third reflective sheet is arranged at a front of the camera assembly, the third reflective sheet being configured to reflect back image data of the robot to the camera assembly.

24. The robot according to claim 20, **characterized in that**, further comprises: at least two camera assemblies; wherein at least one of the at least two camera assemblies is arranged on a first side of the robot, and at least one of the at least two camera assemblies is arranged on a second side of the robot.

25. The robot according to claim 20, **characterized in that**, the robot has a forward end, and the ranging device is arranged on the forward end; and the emitter component is configured to emit light toward a first side or a second side of the robot, and the light reflected by the first reflective sheet faces toward a forward direction of the robot, a lens of a camera assembly of the robot is arranged facing away from the forward direction of the robot, and an optical axis of the camera assembly is obliquely arranged to face away from the forward direction.
